# EUROPÄISCHE PATENTSCHRIFT

(11) **EP 2 427 375 B1**
(45) Veröffentlichungstag und Bekanntmachung des Hinweises auf die Patenterteilung: **02.03.2016**
(21) Anmeldenummer: 10708128.3
(22) Anmeldetag: 06.03.2010
(51) Int. Cl.: B64D 9/00

(54) **VERFAHREN ZUR BESTIMMUNG DER POSITION EINES FRACHTSTÜCKS**
METHOD FOR DETERMINING THE POSITION OF A PIECE OF CARGO
PROCÉDÉ DE DÉTERMINATION DE LA POSITION D'UN COLIS

(30) Priorität: 05.05.2009 DE 102009020039
(43) Veröffentlichungstag der Anmeldung: 14.03.2012
(73) Patentinhaber: Cassidian Airborne Solutions GmbH, 28309 Bremen (DE)
(72) Erfinder: KRANZ, Willi, 27576 Bremerhaven (DE)
(74) Vertreter: Greif, Thomas
(86) Internationale Anmeldenummer: PCT/EP2010/001408
(87) Internationale Veröffentlichungsnummer: WO 2010/127733

(56) Entgegenhaltungen:
- WO-A1-2006/074908
- DE-A1- 10 338 704
- US-A1- 2009 092 471

## Beschreibung

Die vorliegende Erfindung betrifft ein Verfahren zur Bestimmung der Position eines Frachtstücks in einem Frachtraum mittels eines Frachtladesystems sowie ein Frachtladesystem.

Viele Transportmittel, wie beispielsweise Flugzeuge, weisen Frachtladesysteme auf, um Frachtstücke innerhalb eines Frachtraums zu manövrieren und zu positionieren. Derartige Frachtladesysteme sind aus dem Stand der Technik bekannt. Sie weisen üblicherweise eine Vielzahl von Antriebseinheiten, sogenannte Power Drive Units (PDU) auf, die meistens als angetriebene Förderwalzen ausgestaltet sind. Oftmals ist ein Überdeckungssensor in die Antriebseinheit integriert, der detektiert, ob die Antriebseinheit von dem Frachtstück überdeckt wird. Die PDUs und die Überdeckungssensoren sind beispielsweise über ein Bussystem, wie zum Beispiel einen CAN-Bus, miteinander verbunden. Über den Bus können Steuersignale von einer Steuereinheit an die PDUs oder die Ausgangssignale der Überdeckungssensoren an die Steuereinheit übertragen werden.

Das Dokument WO 2006/074908 der Anmelderin offenbart die Verfolgung eines Frachtstücks innerhalb eines Frachtraums mittels eines Frachtladesystems. Dabei werden die Ausgangssignale der Überdeckungssensoren ausgewertet. Eine solche Positionsbestimmung ist jedoch relativ ungenau, da nur bekannt ist, in welchem Block sich das Frachtstück befindet. Es ist daher die Aufgabe der vorliegenden Erfindung, ein verbessertes Verfahren zur Bestimmung der Position eines Frachtstücks mittels eines Frachtladesystems und ein entsprechendes Frachtladesystem bereitzustellen.

Gelöst wird diese Aufgabe durch das Verfahren nach Anspruch 1 und das Frachtladesystem nach Anspruch 7. Vorteilhafte Ausgestaltungsformen sind den abhängigen Ansprüchen zu entnehmen.

Das Verfahren zur Bestimmung der Position eines Frachtstücks in einem Frachtraum mittels eines Frachtladesystems mit Antriebseinheiten, die Überdeckungssensoren aufweisen, und einem Datenbus, an den die Antriebseinheiten und die Überdeckungssensoren angeschlossen sind, basiert darauf, dass der Zustand der Antriebseinheiten und der Überdeckungssensoren über den Datenbus überwacht wird. Der Zustand einer Antriebseinheit umfasst insbesondere die Förderrichtung und/oder die Fördergeschwindigkeit der Antriebseinheit, wobei die Fördergeschwindigkeit beispielsweise in der Antriebseinheit selber gemessen und über den Datenbus übertragen wird oder in einer anderen Komponente des Frachtladesystems, zum Beispiel einer Recheneinheit, hinterlegt ist. Der Zustand umfasst weiterhin die Information, ob die Antriebseinheit aktiviert ist oder nicht. Diese Information kann von der Antriebseinheit selber über den Datenbus ausgesendet oder aus Steuersignalen auf dem Datenbus extrahiert werden.

Erfindungsgemäß wird die Position des Frachtstücks aus dem Zustand der am Transport des Frachtstücks beteiligten Antriebseinheiten, der zeitlichen Abfolge von Ausgangssignalen der zugehörigen Überdeckungssensoren und der Größe des Frachtstücks berechnet. Die zeitliche Abfolge von Ausgangssignalen der Überdeckungssensoren umfasst insbesondere Informationen darüber, wann ein Zustandswechsel des Sensors von überdeckt zu nicht überdeckt oder umgekehrt erfolgt.

Wechselt beispielsweise der Zustand eines Überdeckungssensors von nicht überdeckt zu überdeckt, so bedeutet dies, dass sich zum Zeitpunkt des Zustandswechsels die Vorderkante des Frachtstücks genau über dem Überdeckungssensor befindet. Als Vorderkante wird diejenige Kante des Frachtstücks bezeichnet, die in Transportrichtung des Frachtstücks voransteht. Es wird also eine andere Kante zur Vorderkante, wenn sich die Förderrichtung des Frachtstücks ändert, ohne dass das Frachtstück gedreht wird. Aus der Zeit, die seit dem Zustandswechsel verstrichen ist, und der Fördergeschwindigkeit der Antriebseinheit lässt sich berechnen, um wie weit das Frachtstück weitergefördert wurde, wo sich also die Vorderkante zum aktuellen Zeitpunkt befindet. Aus der Größe des Frachtstücks ist auch die aktuelle Position der hinteren Kante des Frachtstücks bekannt. Für eine genaue Positionsberechnung ist eine Integration der Fördergeschwindigkeit über die Zeit erforderlich. Bei einer Approximation, bei der die Fördergeschwindigkeit als konstant angenommen wird, reicht es aus, die Fördergeschwindigkeit mit der verstrichenen Zeit zu multiplizieren.

Optional wird die der Berechnung zugrunde gelegte Fördergeschwindigkeit anhand der tatsächlichen Fördergeschwindigkeit korrigiert. Die tatsächliche Fördergeschwindigkeit ergibt sich beispielsweise aus der Zeit, die zwischen den Zustandswechseln der Überdeckungssensoren zweier in Förderrichtung hintereinander liegender Antriebseinheiten liegt, und dem bekannten Abstand dieser Überdeckungssensoren. Die korrigierte Fördergeschwindigkeit kann dann den folgenden Positionsbestimmungen zugrunde gelegt werden.

In einer Ausgestaltungsform der Erfindung wird neben der Größe auch die Form des Frachtstücks bei der Berechnung der Position berücksichtigt. Dies ist beispielsweise dann vorteilhaft, wenn die Vorderkante des Frachtstücks eine unregelmäßige Form aufweist und die Überdeckungssensoren quer zur Förderrichtung des Frachtstücks versetzt angeordnet sind.

Bevorzugt werden die Form und/oder die Größe des Frachtstücks mittels RFID ermittelt. Dazu ist das Frachtstück beispielsweise mit einem RFID-Transponder versehen, der den Typ des Frachtstücks an einen RFID-Empfänger übermittelt, der bevorzugt an den Datenbus des Frachtladesystems angeschlossen ist. Die Ermittlung der Größe und/oder Form beziehungsweise des Typs des Frachtstücks erfolgt beispielsweise dann, wenn das Frachtstück in den Frachtraum eingebracht wird.

In einer Ausgestaltungsform wird bei der Berechnung der Position des Frachtstücks ein Endanschlag im Transportweg des Frachtstücks berücksichtigt. Dies bedeutet, dass dem Frachtladesystem die Position des Endanschlags im Förderweg des Frachtstücks bekannt ist und eine Position der Vorderkante des Frachtstücks über den Endanschlag hinaus als nicht plausibel angesehen wird. Ergibt die Positionsberechnung, dass die Vorderkante des Frachtstücks über den Endanschlag hinausgeht, wird die berechnete Position durch eine Position ersetzt, in der das Frachtstück am Endanschlag anliegt.

In einer weiteren Ausgestaltungsform wird die berechnete Position des Frachtstücks als Endposition angesehen, wenn eine Verriegelung hinter dem Frachtstück aktiviert wird. Derartige Verriegelungen sind bei Frachtladesystemen beispielsweise in Form aufstellbarer Riegel bekannt. Die Verriegelung ist bevorzugt mit dem Datenbus verbunden, sodass die Information über den Status der Verriegelung automatisch an andere Komponenten des Frachtladesystems mitgeteilt und ausgewertet werden kann. Aus der Endposition des Frachtstücks (und der möglichen anderen Frachtstücke) lässt sich beispielsweise die Gewichtsverteilung des Transportmittels berechnen, was insbesondere bei Flugzeugen von Vorteil ist. Außerdem lässt sich das Frachtstück leicht auffinden, beispielsweise wenn es nachträglich ausgeladen oder untersucht werden muss.

Bevorzugt wird das Ausgangssignal eines der Verriegelung zugeordneten Näherungssensors bei der Berechnung der Position des Frachtstücks berücksichtigt. Da die Position dieses Näherungssensors bekannt ist, kann aus dessen Ausgangssignal auf die Position des Frachtstücks geschlossen werden. Vorteilhaft stellt das Ausgangssignal nicht nur ein binäres Signal dar, sondern enthält einen Zahlenwert für den Abstand des Frachtstücks vom Näherungssensor.

Die Erfindung betrifft weiterhin ein Frachtladesystem mit Antriebseinheiten, die Überdeckungssensoren aufweisen, einer Recheneinheit und einem Datenbus, an den die Antriebseinheiten, die Überdeckungssensoren und die Recheneinheit angeschlossen sind, sodass die Recheneinheit den Zustand der Antriebseinheiten und der Überdeckungssensoren über den Datenbus empfangen kann. Erfindungsgemäß ist die Recheneinheit dazu ausgebildet, die Position des Frachtstücks aus dem Zustand der am Transport des Frachtstücks beteiligten Antriebseinheiten, der zeitlichen Abfolge von Ausgangssignalen der zugehörigen Überdeckungssensoren und der Größe des Frachtstücks zu berechnen. Die Recheneinheit ist demnach dazu ausgebildet, das vorstehend beschriebene Verfahren auszuführen

Die Größe des Frachtstücks ist beispielsweise in einer Datenbank hinterlegt. Der Abruf der Größe aus der Datenbank erfolgt beispielsweise anhand einer Kennung des Frachtstücks, die beispielsweise von einem RFID-Transponder auf dem Frachtstück ausgesendet und von einem RFID-Empfänger empfangen wird. Der RFID-Empfänger ist bevorzugt mit dem Datenbus verbunden. Die Größe des Frachtstücks kann für definierte Arten von Frachtstücken, beispielsweise LD3, LD6, 88"-Paletten oder 96"-Paletten, einheitlich sein, sodass als Kennung eine Typkennung ausreicht. Die Kennung kann auch eine individuelle Kennung sein, sodass die in der Datenbank hinterlegte Größe genau einem Frachtstück zugeordnet ist. Alternativ wird das Frachtstück beim Einbringen in den Frachtraum vermessen, beispielsweise mittels Ultraschall oder eines Laser-Abtasters.

In einer Ausgestaltungsform weist das Frachtladesystem Mittel zur Ermittlung der Form des Frachtstücks auf, wobei die Recheneinheit dazu ausgebildet ist, die Form bei der Berechnung der Position des Frachtstücks zu berücksichtigen. Bei dem Mittel zur Ermittlung der Form des Frachtstücks handelt es sich beispielsweise um einen RFID-Empfänger, der eine Kennung von einem RFID-Transponder des Frachtstücks empfängt. Dies ist bevorzugt der RFID-Empfänger, der auch zur Ermittlung der Größe des Frachtstücks verwendet wird. Es kann die gleiche Kennung wie bei der Bestimmung der Größe des Frachtstücks verwendet werden. Aus der Kennung kann die Form abgeleitet werden, beispielsweise mittels einer Datenbank, die eine Zuordnung von Kennungen zu Formen enthält. Alternativ oder zusätzlich wird die Form mittels Bildverarbeitung aus den Ausgangssignalen mindestens einer Bildgebungseinrichtung, wie beispielsweise einer Kamera, gewonnen.

In einer weiteren Ausgestaltungsform der Erfindung enthält das Frachtladesystem eine Verriegelung für das Frachtstück und einen mit dem Datenbus verbundenen Näherungssensor an der Verriegelung, wobei die Recheneinheit dazu ausgebildet ist, das Ausgangssignal des Näherungssensors bei der Berechnung der Position des Frachtstücks zu berücksichtigen.

In noch einer weiteren Ausgestaltungsform weist das Frachtladesystem einen Endanschlag im Transportweg des Frachtstücks auf, wobei die Recheneinheit dazu ausgebildet ist, den Endanschlag bei der Berechnung der Position des Frachtstücks zu berücksichtigen. Die Vorteile der Verriegelung und des Endanschlags sind vorstehend bereits beschrieben worden.

Es ist möglich, mehrere der vorgenannten Ausgestaltungsformen zu einer gemeinsamen Ausgestaltungsform zu kombinieren, wobei auch nur einzelne Merkmale der Ausgestaltungsformen miteinander kombiniert werden können. Nicht erfindungswesentliche Merkmale der Ausgestaltungsformen können weggelassen werden.

Die Erfindung soll anhand eines Ausführungsbeispiels näher beschrieben werden. Dabei zeigt
- Fig. 1a: eine schematische Seitenansicht eines Frachtladesystems mit einem Frachtstück in einer ersten Position,
- Fig. 1b: eine schematische Seitenansicht eines Frachtladesystems mit einem Frachtstück in einer zweiten Position,
- Fig. 1c: eine schematische Seitenansicht eines Frachtladesystems mit einem Frachtstück in einer dritten Position,
- Fig. 2: eine schematische Aufsicht der Darstellung aus Figur 1 a.

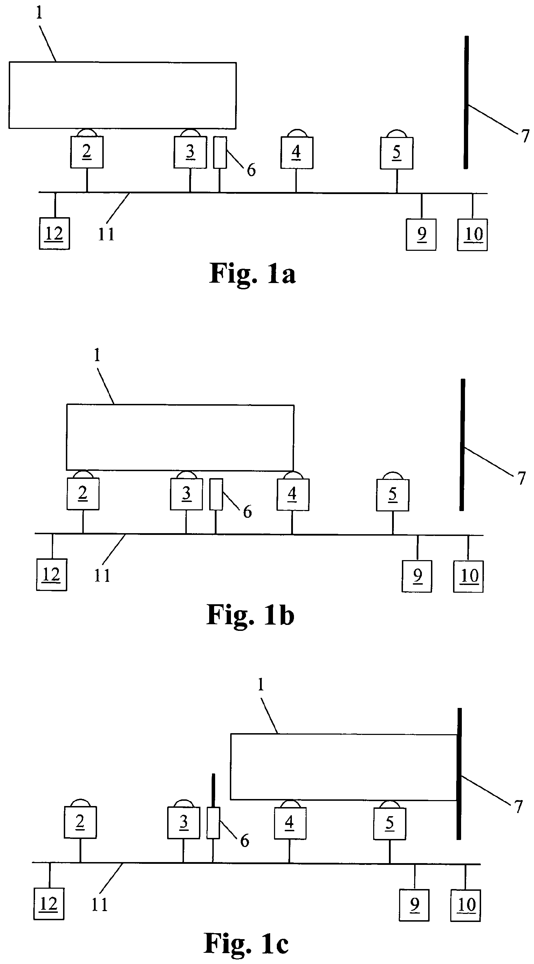

Die Figur 1 a zeigt schematisch Teile eines Frachtladesystems in einem Transportmittel in einer Seitenansicht. Die vier Antriebseinheiten (PDUs) 2, 3, 4 und 5 weisen eine horizontal orientierte, angetriebene Walze auf, um ein Frachtstück 1 innerhalb eines Frachtraums zu fördern. Im vorliegenden Ausführungsbeispiel liegen die vier PDUs hintereinander auf einer Geraden. Jede PDU verfügt über einen nicht dargestellten Überdeckungssensor, der ermittelt, ob die PDU von dem Frachtstück 1 überdeckt wird und ein entsprechendes Signal über den CAN-Bus 11 sendet. Zwischen den PDUs 3 und 4 ist ein Riegel 6 angeordnet, der aufgestellt werden kann, wenn das Frachtstück 1 seine Endposition im Frachtraum erreicht hat.

Die PDUs 2, 3, 4 und 5 sowie der Riegel 6 sind über einen CAN-Bus 11 mit einer Steuereinheit 9 und einer Recheneinheit 10 verbunden. Die Steuereinheit dient dazu, die PDUs 2 bis 5 über den Bus 11 anzusteuern. Dazu ist als Eingabegerät beispielsweise ein Joystick vorgesehen. Die Recheneinheit 10 ist dazu ausgebildet, die Steuersignale der Steuereinheit vom CAN-Bus 11 auszulesen und daraus zu ermitteln, welche PDU aktiviert ist und in welche Richtung die PDU fördert. Die Positionen der PDUs 2 bis 5 sowie des Riegels 6 sind der Recheneinheit 10 bekannt.

Weiterhin mit dem CAN-Bus 11 verbunden ist ein RFID-Empfänger 12, der dazu eingerichtet ist, das Signal eines am Frachtstück 1 angebrachten RFID-Transponders auszulesen und über den CAN-Bus 11 zu senden. Das Signal enthält eine Information über den Typ des Frachtstücks 1, sein Gewicht, seine Größe, seine Form oder eine beliebige Kombination daraus. Die Recheneinheit 10 empfängt dieses Signal. Signalisiert der Typ, dass es sich um ein genormtes Frachtstück handelt, so ermittelt die Recheneinheit 10 die Größe und/oder die Form des Frachtstücks beispielsweise anhand einer Datenbank oder Tabelle. Bei dem Typ kann es sich aber auch um eine individuelle Kennung handeln, die ausschließlich genau ein konkretes Frachtstück repräsentiert. Die Größe und/oder Form dieses Frachtstücks ist beispielsweise in einer Tabelle oder Datenbank hinterlegt, aus der die Recheneinheit 10 die Informationen in Abhängigkeit der Kennung abruft.

Die Figur 1a zeigt das Frachtstück 1 zu einem ersten Zeitpunkt t1 in einer ersten Position. Die Steuereinheit 9 steuert die PDUs 2 und 3 so an, dass sie das Frachtstück 1 horizontal nach rechts fördern. Zu einem zweiten Zeitpunkt t2 hat das Frachtstück die in der Figur 1b dargestellte Position erreicht. In dieser Position überdeckt die Vorderkante des Frachtstücks 1 gerade den Überdeckungssensor der PDU 4. Zum Zeitpunkt t2 ist also die Position der Vorderkante des Frachtstücks 1 exakt bekannt. Aus der Größe des Frachtstücks 1, die der Recheneinheit 10 bekannt ist, lässt sich die Position der hinteren Kante des Frachtstücks 1 berechnen.

Spätestens ab dem Zeitpunkt t2 aktiviert die Steuereinheit 9 auch die PDU 4, um das Frachtstück 1 weiter nach rechts zu fördern. Soll die Position des Frachtstücks 1 zu einem Zeitpunkt t, der später liegt als t2, berechnet werden, so multipliziert die Recheneinheit 10 die zwischen den Zeitpunkten t2 und t vergangene Zeit mit der Fördergeschwindigkeit der PDU 4. Das Ergebnis dieser Multiplikation ist die Strecke, um die das Frachtstück 1 weiter nach rechts gefördert wurde. Dies setzt voraus, dass die Fördergeschwindigkeit der PDU 4 in diesem Zeitraum konstant ist. Bei variabler Fördergeschwindigkeit entspricht die Positionsänderung des Frachtstücks 1 seit dem Zeitpunkt t2 dem Integral der Fördergeschwindigkeit der PDU4 über dem Zeitintervall zwischen t2 und t.

Auf die vorstehend beschriebene Art und Weise kann die Position des Frachtstücks 1 zu jedem beliebigen Zeitpunkt berechnet werden. Dazu geht die Recheneinheit 10 von einer bekannten Position des Frachtstücks 1 zu einem Referenzzeitpunkt aus und berechnet anhand der Zustände der PDUs seit diesem Referenzzeitpunkt die aktuelle Position des Frachtstücks 1. Die Fördergeschwindigkeiten der einzelnen PDUs, optional inklusive der Charakteristik beim Anfahren oder Anhalten der PDU, sind beispielsweise in der Recheneinheit 10 hinterlegt oder werden von jeder PDU gemessen und über den CAN-Bus 11 gesendet und von der Recheneinheit 10 empfangen.

Zu einem späteren, nicht dargestellten Zeitpunkt t3 erreicht die Vorderkante des Frachtstücks 1 gerade den Überdeckungssensor der PDU 5. Da der Recheneinheit 10 der Abstand der Überdeckungssensoren der PDUs 4 und 5 bekannt ist, kann sie aus dem Zeitintervall zwischen t2 und t3 die tatsächliche Fördergeschwindigkeit der PDU 4 berechnen. Diese kann von der theoretischen Fördergeschwindigkeit abweichen, beispielsweise aufgrund einer Abnutzung der Antriebsrolle der PDU 4. Die tatsächliche Fördergeschwindigkeit kann von der Recheneinheit 10 gespeichert und zukünftigen Positionsberechnungen zugrunde gelegt werden. Wird die Fördergeschwindigkeit von der PDU 4 selber ermittelt und über den CAN-Bus 11 ausgesendet, so kann die Recheneinheit 10 einen Korrekturfaktor berechnen, mit dem die übermittelte Fördergeschwindigkeit bei zukünftigen Positionsberechnungen multipliziert wird.

Zu einem Zeitpunkt t4 erreicht die Vorderkante des Frachtstücks 1 gerade einen Anschlag 7, bei dem es sich beispielsweise um eine Wand des Frachtraums oder einen dieser Wand vorgelagerten Abstandshalter handelt. Dies ist in der Figur 1c dargestellt. Fördern die PDUs 4 und 5 weiter, obwohl das Frachtstück am Anschlag 7 anliegt, so würde die vorstehend beschriebene Berechnungsmethode zu einer falschen, über den Anschlag 7 hinausgehenden Position des Frachtstücks 1 führen. Daher ist bevorzugt die Position des Anschlags 7 in der Recheneinheit 10 hinterlegt. Führt die Positionsberechnung zu einer Position der Vorderkante des Frachtstücks 1, die über den Anschlag 7 hinausgeht, so wird die berechnete Position durch eine Position ersetzt, in der die Vorderkante des Frachtstücks 1 an dem Anschlag 7 anliegt. Optional sendet die Recheneinheit in diesem Fall über den CAN-Bus 11 einen Stopp-Befehl an die PDUs 4 und 5, damit diese anhalten und das Frachtstück 1 nicht weiter gegen den Anschlag 7 drücken. Alternativ sendet die Recheneinheit 10 einen entsprechenden Hinweis an die Steuereinheit 9, die den Stopp-Befehl sendet.

Hat das Frachtstück 1 seine Endposition erreicht, beispielsweise wenn es am Anschlag 7 anliegt, so wird der Riegel 6 aufgerichtet. Das Aufrichten des Riegels 6 wird über den CAN-Bus 11 signalisiert. Aufgrund dieser Signalisierung schaltet die Steuereinheit 9 die PDUs 4 und 5 beispielsweise in einen Haltemodus, um das Frachtstück 1 in seiner aktuellen Position zu halten, und verhindert eine weitere Aktivierung der PDUs 4 und 5. Optional verfügt der Riegel 6 über einen Näherungssensor, der den Abstand des Frachtstücks 1 vom Riegel 6 ermittelt und über den CAN-Bus sendet. Bevorzugt empfängt die Recheneinheit 10 diese Abstandsinformation und bezieht diese in die Berechnung der Position des Frachtstücks 1 ein.

Optional sendet die Recheneinheit 10 die Position des Frachtstücks 1 über den CAN-Bus an eine nicht dargestellte weitere Recheneinheit, die unter anderem aus der Position und dem Gewicht des Frachtstücks 1 und eventueller weiterer Frachtstücke die Schwerpunktlage des Transportmittels berechnet. Die Berechnung der Schwerpunktlage kann alternativ auch in der Recheneinheit 10 erfolgen.

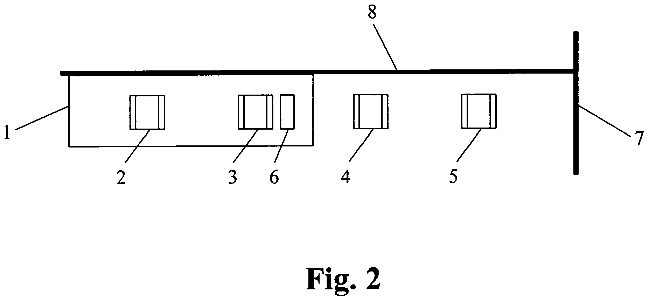

Vorstehend wurde die Positionsberechnung in Förderrichtung des Frachtstücks 1 beschrieben. Die Figur 2 zeigt die Darstellung aus der Figur 1 a in einer Aufsicht mit einer Möglichkeit zur Bestimmung der Frachtstückposition quer zur Förderrichtung. Dazu wird das Frachtstück 1 mittels nicht dargestellter PDUs gegen einen Anschlag 8, beispielsweise eine Schiene, gedrückt. Die Position des Frachtstücks 1 ist somit durch die Position des Anschlags 8 vorgegeben. Alternativ kann auch jede andere Seitenführung vorgesehen sein. Weiterhin alternativ kann die anhand der Figuren 1a bis 1c beschriebene Positionsberechnung analog auch für andere Transportrichtungen durchgeführt werden.

Anstatt einer einzelnen Reihe von PDUs 2 bis 5 können zwei oder mehr parallele Reihen von PDUs vorgesehen sein. Auch eine beliebige andere Anordnung von PDUs ist möglich. Bei der Berechnung der Position eines Frachtstücks kann der Zustand mehrerer PDUs berücksichtigt werden. So wird beispielsweise für zwei oder mehr PDUs einzeln die Position des Frachtstücks berechnet und die Position aus den einzelnen Positionen gemittelt.

## Patentansprüche

1. Verfahren zur Bestimmung der Position eines Frachtstücks (1) in einem Frachtraum mittels eines Frachtladesystems mit Antriebseinheiten (2, 3, 4, 5), die Überdeckungssensoren aufweisen, und einem Datenbus (11), an den die Antriebseinheiten (2, 3, 4, 5) und die Überdeckungssensoren angeschlossen sind, wobei der Zustand der Antriebseinheiten (2, 3, 4, 5) und der Überdeckungssensoren über den Datenbus (11) überwacht wird, **dadurch gekennzeichnet, dass** die Position des Frachtstücks (1) aus dem Zustand der am Transport des Frachtstücks beteiligten Antriebseinheiten (2, 3, 4, 5), der zeitlichen Abfolge von Ausgangssignalen der zugehörigen Überdeckungssensoren und der Größe des Frachtstücks (1) berechnet wird.

2. Verfahren nach Anspruch 1, **dadurch gekennzeichnet, dass** die Form des Frachtstücks (1) bei der Berechnung seiner Position berücksichtigt wird.

3. Verfahren nach einem der Ansprüche 1 oder 2, **dadurch gekennzeichnet, dass** die Form und/oder Größe des Frachtstücks (1) mittels RFID ermittelt wird.

4. Verfahren nach einem der Ansprüche 1 bis 3, **dadurch gekennzeichnet, dass** bei der Berechnung der Position des Frachtstücks (1) ein Endanschlag (7) im Transportweg des Frachtstücks (1) berücksichtigt wird.

5. Verfahren nach einem der Ansprüche 1 bis 4, **dadurch gekennzeichnet, dass** die berechnete Position des Frachtstücks (1) als Endposition angesehen wird, wenn eine Verriegelung (6) hinter dem Frachtstück (1) aktiviert wird.

6. Verfahren nach Anspruch 5, **dadurch gekennzeichnet, dass** das Ausgangssignal eines der Verriegelung (6) zugeordneten Näherungssensors bei der Berechnung der Position des Frachtstücks (1) berücksichtigt wird.

7. Frachtladesystem mit Antriebseinheiten (2, 3, 4, 5), die Überdeckungssensoren aufweisen, einer Recheneinheit (10) und einem Datenbus (11), an den die Antriebseinheiten (2, 3, 4, 5), die Überdeckungssensoren und die Recheneinheit (10) angeschlossen sind, sodass die Recheneinheit (10) den Zustand der Antriebseinheiten (2, 3, 4, 5) und der Überdeckungssensoren über den Datenbus (11) empfangen kann, wobei die Recheneinheit (10) dazu ausgebildet ist, die Position des Frachtstücks (1) aus dem Zustand der am Transport des Frachtstücks (1) beteiligten Antriebseinheiten (2, 3, 4, 5), und der zeitlichen Abfolge von Ausgangssignalen der zugehörigen Überdeckungssensoren zu berechnen, **dadurch gekennzeichnet, dass** die Recheneinheit (19) dazu ausgebildet ist, die Position des Frachtstücks auch aus der Größe der Frachtstücks (1) zu berechnen.

8. Frachtladesystem nach Anspruch 7, **gekennzeichnet durch** Mittel (12) zur Ermittlung der Form des Frachtstücks (1), wobei die Recheneinheit (10) dazu ausgebildet ist, die Form bei der Berechnung der Position des Frachtstücks (1) zu berücksichtigen.

9. Frachtladesystem nach einem der Ansprüche 7 oder 8, **gekennzeichnet durch** eine Verrieglung (6) für das Frachtstück (1) und einen mit dem Datenbus (11) verbundenen Näherungssensor an der Verriegelung (6), wobei die Recheneinheit (10) dazu ausgebildet ist, das Ausgangssignal des Näherungssensors bei der Berechnung der Position des Frachtstücks (1) zu berücksichtigen.

10. Frachtladesystem nach einem der Ansprüche 7 bis 9, **gekennzeichnet durch** einen Endanschlag (7) im Transportweg des Frachtstücks (1), wobei die Recheneinheit (10) dazu ausgebildet ist, den Endanschlag (7) bei der Berechnung der Position des Frachtstücks (1) zu berücksichtigen.

## Claims

1. Method for determining the position of a piece of cargo (1) in a cargo hold by means of a cargo loading system having drive units (2, 3, 4, 5) which comprise overlap sensors, and a data bus (11), to which the drive units (2, 3, 4, 5) and the overlap sensors are connected, the state of the drive units (2, 3, 4, 5) and of the overlap sensors being monitored by way of the data bus (11), **characterized in that** the position of the piece of cargo (1) is calculated from the state of the drive units (2, 3, 4, 5) involved in the transport of the piece of cargo, the time sequence of output signals of the associated overlap sensors and the size of the piece of cargo (1).

2. Method according to Claim 1, **characterized in that** the form of the piece of cargo (1) is taken into account in the calculation of its position.

3. Method according to either of Claims 1 and 2, **characterized in that** the form and/or size of the piece of cargo (1) is determined by means of RFID.

4. Method according to one of Claims 1 to 3, **characterized in that** an end stop (7) in the transporting path of the piece of cargo (1) is taken into account in the calculation of the position of the piece of cargo (1).

5. Method according to one of Claims 1 to 4, **characterized in that** the calculated position of the piece of cargo (1) is regarded as an end position when a locking mechanism (6) behind the piece of cargo (1) is activated.

6. Method according to Claim 5, **characterized in that** the output signal of a proximity sensor assigned to the locking mechanism (6) is taken into account in the calculation of the position of the piece of cargo (1).

7. Cargo loading system having drive units (2, 3, 4, 5) which comprise overlap sensors, a computing unit (10) and a data bus (11), to which the drive units (2, 3, 4, 5), the overlap sensors and the computing unit (10) are connected, so that the computing unit (10) can receive the state of the drive units (2, 3, 4, 5) and the overlap sensors by way of the data bus (11), the computing unit (10) being designed to calculate the position of the piece of cargo (1) from the state of the drive units (2, 3, 4, 5) involved in the transport of the piece of cargo (1) and the time sequence of output signals of the associated overlap sensors, **characterized in that** the computing unit (19) is designed also to calculate the position of the piece of cargo from the size of the piece of cargo (1).

8. Cargo loading system according to Claim 7, **characterized by** means (12) for determining the form of the piece of cargo (1), the computing unit (10) being designed to take the form into account in the calculation of the position of the piece of cargo (1).

9. Cargo loading system according to either of Claims 7 and 8, **characterized by** a locking mechanism (6) for the piece of cargo (1) and a proximity sensor that is connected to the data bus (11) and is on the locking mechanism (6), the computing unit (10) being designed to take the output signal of the proximity sensor into account in the calculation of the position of the piece of cargo (1).

10. Cargo loading system according to one of Claims 7 to 9, **characterized by** an end stop (7) in the transporting path of the piece of cargo (1), the computing unit (10) being designed to take the end stop (7) into account in the calculation of the position of the piece of cargo (1).

## Revendications

1. Procédé de détermination de la position d'un colis (1) dans une soute à fret au moyen d'un système de chargement de fret comprenant des unités d'entraînement (2, 3, 4, 5) qui comportent des capteurs de recouvrement et un bus de données (11) auquel sont connectés les unités d'entraînement (2, 3, 4, 5) et les capteurs de recouvrement, dans lequel l'état des unités d'entraînement (2, 3, 4, 5) et des capteurs de recouvrement est surveillé par l'intermédiaire du bus de données (11), **caractérisé en ce que** la position du colis (1) est calculée à partir de l'état des unités d'entraînement (2, 3, 4, 5) associées au transport du colis, de la séquence temporelle de signaux de sortie des capteurs de recouvrement associés et de la taille du colis (1).

2. Procédé selon la revendication 1, **caractérisé en ce que** la forme du colis (1) est prise en compte lors du calcul de sa position.

3. Procédé selon l'une des revendications 1 ou 2, **caractérisé en ce que** la forme et/ou la taille du colis (1) est déterminée par RFID.

4. Procédé selon l'une quelconque des revendications 1 à 3, **caractérisé en ce que**, lors du calcul de la position du colis (1), une butée d'extrémité (7) est prise en compte dans le trajet de transport du colis (1).

5. Procédé selon l'une quelconque des revendications 1 à 4, **caractérisé en ce que** la position calculée du colis (1) est considérée comme étant une position finale lorsqu'un système de verrouillage (6) est activé à l'arrière du colis (1).

6. Procédé selon la revendication 5, **caractérisé en ce que** le signal de sortie d'un capteur de proximité associé au système de verrouillage (6) est pris en compte lors du calcul de la position du colis (1).

7. Système de chargement de fret comportant des unités d'entraînement (2, 3, 4, 5) qui comprennent des capteurs de recouvrement, une unité de calcul (10) et un bus de données (11) auquel sont raccordés les unités d'entraînement (2, 3, 4, 5), les capteurs de recouvrement et l'unité de calcul (10), de manière à ce que l'unité de calcul (10) puisse recevoir l'état des unités d'entraînement (2, 3, 4, 5) et des capteurs de recouvrement par l'intermédiaire du bus de données (11), dans lequel l'unité de calcul (10) est conçue pour calculer la position du colis (1) à partir de l'état des unités d'entraînement (2, 3, 4, 5) associées au transport du colis (1) et de la séquence temporelle de signaux de sortie des capteurs de recouvrement associés, **caractérisé en ce que** l'unité de calcul (19) est également conçue pour calculer la position du colis à partir de la taille du colis (1).

8. Système de chargement de fret selon la revendication 7, **caractérisé par** des moyens (12) destinés à déterminer la forme du colis (1), dans lequel l'unité de calcul (10) est conçue pour prendre en compte la forme lors du calcul de la position du colis (1).

9. Système de chargement de fret selon l'une des revendications 7 ou 8, **caractérisé par** un système de verrouillage (6) destiné au colis (1) et par un capteur de proximité connecté au bus de données (11) sur le système de verrouillage (6), dans lequel l'unité de calcul (10) est conçue pour prendre en compte le signal de sortie du capteur de proximité lors du calcul de la position du colis (1).

10. Système de chargement de fret selon l'une quelconque des revendications 7 à 9, **caractérisé par** une butée d'extrémité (7) sur le trajet de transport du colis (1), dans lequel l'unité de calcul (10) est conçue pour prendre en compte la butée d'extrémité (7) lors du calcul de la position du colis (1).
